# EUROPEAN PATENT APPLICATION

(11) **EP 4 148 546 A1**
(43) Date of publication of application: **15.03.2023**
(21) Application number: 22797613.1
(22) Date of filing: 24.05.2022
(51) Int. Cl.: G06F 3/0481, G06K 9/00

(54) **LIGHT SPOT DISPLAY METHOD, ELECTRONIC DEVICE AND COMPUTER-READABLE STORAGE MEDIUM**

(30) Priority: 29.07.2021 CN 202110864394
(71) Applicant: Honor Device Co., Ltd., Shenzhen, Guangdong 518040 (CN)
(72) Inventor: CUI, Chuang, Shenzhen, Guangdong 518040 (CN)
(74) Representative: Körber, Martin Hans
(86) International application number: PCT/CN2022/094660
(87) International publication number: WO 2023/005382

(57) **Abstract**

This application provides a light spot display method and apparatus. The method is applied to an electronic device. After detecting a fingerprint event, a fingerprint driver directly transmits the fingerprint event to a display driver, and the display driver further controls a display to display a first light spot based on preset first-light-spot display data. According to this solution, no layer for light spot display needs to be rendered at a logic display layer, sparing the need of reporting a fingerprint event layer by layer to the fingerprint service and then delivering light spot display data by the fingerprint service layer by layer, thereby reducing time spent on layer-by-layer event reporting and layer-by-layer display data delivery. This significantly reduces time spent on a process from finger tapping on a fingerprint detection zone to displaying of a light spot, increases a speed of responding to a fingerprint event, and reduces time of an entire fingerprint recognition process.

## Description

This application claims priority to Chinese Patent Application No. 202110864394.5, filed with China National Intellectual Property Administration on July 29, 2021 and entitled "LIGHT SPOT DISPLAY METHOD, ELECTRONIC DEVICE, AND COMPUTER-READABLE STORAGE MEDIUM", which is incorporated herein by reference in its entirety.

### TECHNICAL FIELD

This application relates to the technical field of optical fingerprint recognition, and in particular, to a light spot display method, an electronic device, and a computer-readable storage medium.

### BACKGROUND

Fingerprint recognition technologies are to recognize fingerprint information by sensing and analyzing signals of valleys and ridges of a fingerprint by a fingerprint recognition module. At present, in terms of fingerprint imaging principles, fingerprint recognition technologies are mainly classified into three categories: capacitive fingerprint recognition, optical fingerprint recognition, and ultrasonic fingerprint recognition. The optical fingerprint recognition technology has the advantages of strong penetration capability and full screen support, and therefore has been widely used in electronic devices.

Under-screen fingerprint recognition is implemented using the optical fingerprint recognition technology. The under-screen fingerprint recognition is based on the photoelectric reflection technology. When a finger taps on a display, a light spot is formed in a fingerprint detection zone of the display, and light of the light spot penetrates through a protective cover plate of the display to reach the finger and is reflected by the finger to generate reflected light. The reflected light varies with a pattern of lines of the fingerprint, so that after the reflected light penetrates through the display to return to a fingerprint sensor under the display, the fingerprint sensor obtains a fingerprint image so as to implement fingerprint recognition.

However, a current light spot display process takes a long time, resulting in a low speed of responding to a fingerprint event that a finger taps on a fingerprint detection zone. As a result, an entire fingerprint recognition process takes a long time.

### SUMMARY

In view of this, this application provides a light spot display method, an electronic device, and a computer-readable storage medium, to resolve a problem that it takes a long time to light up a light spot in the related art. Technical solutions disclosed in this application are as follows.

According to a first aspect, this application provides a light spot display method, applied to an electronic device with a touchscreen, where an operating system of the electronic device includes a fingerprint driver and a display driver, and the method includes: receiving, by the fingerprint driver, a fingerprint event, where the fingerprint event is generated based on a touch operation in a detection zone of the touchscreen; directly transmitting, by the fingerprint driver, the fingerprint event to the display driver; and controlling, by the display driver in response to the fingerprint event, the touchscreen to display a first light spot based on preset first-light-spot display data. In this way, the fingerprint driver directly transmits the fingerprint event to the display driver, and the display driver controls the display to display the first light spot based on the preset first-light-spot display data, sparing the need of reporting the fingerprint event layer by layer to a fingerprint service and then delivering light spot display data by the fingerprint service layer by layer, thereby reducing time spent in layer-by-layer event reporting and layer-by-layer display data delivery. This significantly reduces time spent on a process from finger tapping on a fingerprint detection zone to displaying of a light spot, increases a speed of responding to a fingerprint event, and reduces time of an entire fingerprint recognition process.

According to the first aspect, the fingerprint driver transmits the fingerprint event to the display driver through a transmit path between the fingerprint driver and the display driver. In this way, the fingerprint driver can directly transmit the fingerprint event to the display driver through the transmit path so that a light spot is immediately displayed in response to the fingerprint event, thereby reducing time spent in the light spot display process.

According to any one of the first aspect or the implementation of the first aspect, the display driver transmits a light spot display instruction to the touchscreen in response to the fingerprint event, where the light spot display instruction is used to enable the touchscreen to control display statuses of display pixels in the touchscreen based on the preset first-light-spot display data, to display the first light spot.

According to any one of the first aspect or the implementations of the first aspect, the first-light-spot display data includes a light spot position, shape, size, and color; and the light spot display instruction is used to enable the touchscreen to determine, based on the light spot position, shape, and size, a light spot display zone, and control a display brightness corresponding to display pixels in the light spot display zone to reach a specified brightness and a display color of the display pixels to change to the light spot color. In this way, the display pixels in the light spot display zone of the display are directly controlled to be lit up while pixels in other zones do not need to be lit up. This reduces power consumption in displaying a light spot on the display.

According to any one of the first aspect or the implementations of the first aspect, the display driver generates a light spot display interrupt in response to the fingerprint event; the display driver obtains the preset first-light-spot display data from the display driver; and the display driver transmits the light spot display interrupt and the first-light-spot display data to the touchscreen. In this implementation, the first-light-spot display data is preset in the display driver, and the first-light-spot display data in the display driver can be updated based on a light spot display requirement, so that light spot display can be adjusted based on an actual display requirement.

According to any one of the first aspect or the implementations of the first aspect, the light spot display instruction is used to enable the touchscreen to obtain the preset first-light-spot display data from the touchscreen, and control the display statuses of the display pixels in the touchscreen based on the first-light-spot display data, to display the first light spot. In this implementation, the first-light-spot display data is preset in the touchscreen (for example, a display chip). In this way, the display driver needs to transmit only the light spot display interrupt to the display, and does not need to transmit other types of data. This requires lower transmission performance of a software interface between the display driver and the display.

According to any one of the first aspect or the implementations of the first aspect, the operating system of the electronic device further includes a fingerprint service and a graphics processing module, and the method further includes: receiving, by the fingerprint service, the fingerprint event; obtaining second-light-spot display data in response to the fingerprint event, where the second-light-spot display data is display content data obtained in rendering layers for light spot display; receiving, by the graphics processing module, the second-light-spot display data, and obtaining fingerprint scenario mark information; and synchronously transmitting, by the graphics processing module, the fingerprint scenario mark information and the second-light-spot display data to the display driver, where the fingerprint scenario mark information and the second-light-spot display data are used to enable the touchscreen to display a second light spot. In this implementation, after the touchscreen displays the first light spot, the fingerprint service renders the second light spot in response to the fingerprint event, and the second light spot is used to cover the first light spot displayed by a physical display layer, so as to conceal the display defects of the first light spot and finally present a light spot with no display defects, thereby improving the light spot display effect.

According to any one of the first aspect or the implementations of the first aspect, the graphics processing module simultaneously transmits the fingerprint scenario mark information and the second-light-spot display data to the display driver through a same transmit path. In this implementation, the fingerprint scenario mark information and the second-light-spot display data are synchronously transmitted, thereby avoiding exception or delay in displaying the second light spot when the fingerprint scenario mark information and the second-light-spot display data are not synchronously received. Therefore, time spent on the display process of the second light spot is reduced, that is, the second light spot is displayed faster.

According to any one of the first aspect or the implementations of the first aspect, the graphics processing module writes the fingerprint scenario mark information and the second-light-spot display data into a same transmit queue, and transmits data in the transmit queue to the display driver through the same transmit path.

According to any one of the first aspect or the implementations of the first aspect, the layers for light spot display include a light spot layer and a mask layer; the light spot layer is the same as the light spot displayed on the touchscreen in position and shape, and an area of the light spot layer is larger than a size of the light spot displayed on the touchscreen; and the mask layer includes a hollow carved zone and a non-hollow carved zone, and the hollow carved zone is the same as the light spot layer in position, shape, and size.

According to any one of the first aspect or the implementations of the first aspect, the operating system of the electronic device is an android system, the fingerprint driver is a fingerprint driver in the android system, and the display driver is a display driver in the android system.

According to any one of the first aspect or the implementations of the first aspect, the operating system of the electronic device is an android system, the fingerprint service is a fingerprint service in the android system, the graphics processing module includes a graphics engine and a graphics hardware composer in the android system, and the display driver is a display driver in the android system; in response to the fingerprint event, the fingerprint service obtains the second-light-spot display data and transmits the second-light-spot display data to the graphics engine; the graphics engine transmits the second-light-spot display data to the graphics hardware composer; the graphics hardware composer obtains the fingerprint scenario mark information after receiving the second-light-spot display data; and the graphics hardware composer synchronously transmits the fingerprint scenario mark information and the second-light-spot display data to the display driver.

According to any one of the first aspect or the implementations of the first aspect, the graphics hardware composer synchronously transmits the fingerprint scenario mark information and the second-light-spot display data to the display driver through a same transmit path.

According to any one of the first aspect or the implementations of the first aspect, the graphics hardware composer writes the fingerprint scenario mark information and the second-light-spot display data into a same transmit queue, and transmits data in the transmit queue to the display driver through the same transmit path.

According to a second aspect, this application provides an electronic device, where the electronic device includes one or more processors, a memory, and a touchscreen; the memory is configured to store program code; and the processor is configured to run the program code to perform the following steps: receiving, by a fingerprint driver, a fingerprint event, where the fingerprint event is generated based on a touch operation in a detection zone of the touchscreen; directly transmitting, by the fingerprint driver, the fingerprint event to a display driver; and controlling, by the display driver in response to the fingerprint event, the touchscreen to display a first light spot based on preset first-light-spot display data.

According to the second aspect, the fingerprint driver transmits the fingerprint event to the display driver through a transmit path between the fingerprint driver and the display driver.

According to any one of the second aspect or the implementation of the second aspect, the display driver transmits a light spot display instruction to the touchscreen in response to the fingerprint event, where the light spot display instruction is used to enable the touchscreen to control display statuses of display pixels in the touchscreen based on the preset first-light-spot display data, to display the first light spot.

According to any one of the second aspect or the implementations of the second aspect, the first-light-spot display data includes a light spot position, shape, size, and color; and the light spot display instruction is used to enable the touchscreen to determine, based on the light spot position, shape, and size, a light spot display zone, and control a display brightness corresponding to display pixels in the light spot display zone to reach a specified brightness and a display color of the display pixels to change to the light spot color.

According to any one of the second aspect or the implementations of the second aspect, the display driver generates a light spot display interrupt in response to the fingerprint event; the display driver obtains the preset first-light-spot display data; and the display driver transmits the light spot display interrupt and the first-light-spot display data to the touchscreen.

According to any one of the second aspect or the implementations of the second aspect, the light spot display instruction is used to enable the touchscreen to obtain the preset first-light-spot display data from the touchscreen, and control the display statuses of the display pixels in the touchscreen based on the first-light-spot display data, to display the first light spot.

According to any one of the second aspect or the implementations of the second aspect, the processor runs the program code in the memory to further perform the following steps: obtaining, by a fingerprint service, second-light-spot display data in response to the fingerprint event, where the second-light-spot display data is display content data obtained in rendering layers for light spot display; receiving, by a graphics processing module, the second-light-spot display data, and obtaining fingerprint scenario mark information; and synchronously transmitting, by the graphics processing module, the fingerprint scenario mark information and the second-light-spot display data to the display driver, where the fingerprint scenario mark information and the second-light-spot display data are used to enable the touchscreen to display a second light spot.

According to any one of the second aspect or the implementations of the second aspect, the graphics processing module simultaneously transmits the fingerprint scenario mark information and the second-light-spot display data to the display driver through a same transmit path.

According to any one of the second aspect or the implementations of the second aspect, the graphics processing module writes the fingerprint scenario mark information and the second-light-spot display data into a same transmit queue, and transmits data in the transmit queue to the display driver through the same transmit path.

According to a third aspect, this application further provides a computer-readable storage medium, storing instructions, where when the instructions are run on an electronic device, the electronic device is enabled to perform the light spot display method according to any one of the first aspect or the implementations of the first aspect.

According to a fourth aspect, this application further provides a computer program product, where the computer program product is run on a computer, the computer is enabled to perform the light spot display method according to any one of the first aspect or the implementations of the first aspect.

It should be understood that the description of technical features, technical solutions, beneficial effects or other similar terms in this application do not imply that all features and advantages can be obtained in any single embodiment. On the contrary, it can be understood that the description of features or beneficial effects means that a specific technical feature, technical solution or beneficial effect is included in at least one embodiment. Therefore, the description of the technical features, technical solutions or beneficial effects in this specification do not necessarily indicate a same embodiment. Furthermore, the technical features, technical solutions, and beneficial effects described in the embodiments may also be combined in any appropriate manner. A person skilled in the art will understand that the embodiments can be implemented without one or more specific technical features, technical solutions or beneficial effects of a specific embodiment. In other embodiments, additional technical features and beneficial effects may also be identified in a specific embodiment that does not embody all the embodiments.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is an example diagram of a light spot display process according to an embodiment of this application;
FIG. 2 is a schematic diagram of principles of under-screen optical fingerprint recognition technology according to an embodiment of this application;
FIG. 3 is a schematic structural diagram of an electronic device according to an embodiment of this application;
FIG. 4 is a block diagram of a software structure of an electronic device according to an embodiment of this application;
FIG. 5 is a flowchart of how software and hardware of an electronic device work in a light spot display scenario in the related art;
FIG. 6 is a flowchart of a light spot display method according to an embodiment of this application;
FIG. 7 is a flowchart of another light spot display method according to an embodiment of this application;
FIG. 8 is a schematic diagram of a light spot at a logic display layer according to an embodiment of this application;
FIG. 9 is a flowchart of still another light spot display method according to an embodiment of this application;
FIG. 10 is a flowchart of yet another light spot display method according to an embodiment of this application; and
FIG. 11 is a schematic structural diagram of a light spot display apparatus according to an embodiment of this application.

### DESCRIPTION OF EMBODIMENTS

In the specification, claims, and accompanying drawings of this application, the terms "first", "second", "third", and so on are intended to distinguish between different objects but do not indicate a particular order.

In the embodiments of this application, the word such as "an example" or "for example" is used to represent an example, an instance, or an illustration. Any embodiment or design solution described as "an example" or "for example" in the embodiments of this application shall not be interpreted to be more preferential or advantageous than other embodiments or design solutions. To be precise, the terms such as "an example" or "for example" is intended to present a related concept in a specific manner.

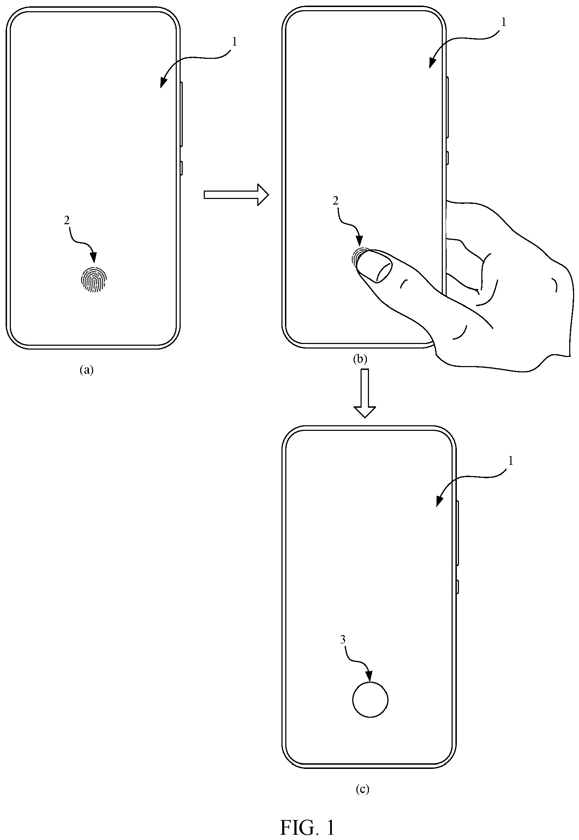

FIG. 1 is an example diagram of a light spot display process according to an embodiment of this application. In this example, a mobile phone is used as an example to describe a light spot display process.

As shown in FIG. 1, a display zone of a touchscreen 1 includes a fingerprint detection zone 2. When a finger taps on the fingerprint detection zone 2, a sufficiently bright light spot 3 (as shown in (c) of FIG. 1) is displayed in the fingerprint detection zone 2 of the touchscreen 1.

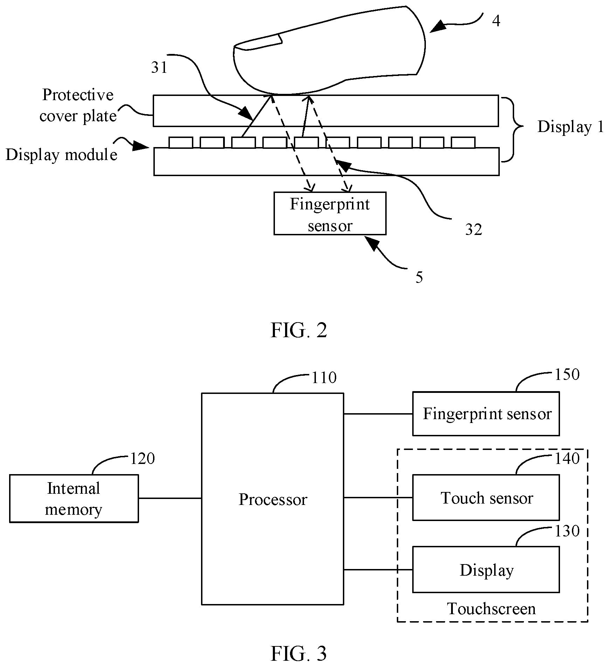

FIG. 2 is a schematic diagram of principles of under-screen optical fingerprint recognition according to an embodiment of this application. As shown in FIG. 2, a touchscreen 1 includes a display module and a protective cover plate over the display module. The display module emits light 31 to form a light spot. The light 31 penetrates through the protective cover plate and irradiates a finger 4 at which the light 31 experiences reflection and scattering. The light resulting from reflection or scattering is generally referred to as fingerprint detection light 32. The fingerprint detection light 32 carries fingerprint information of the finger 4. The fingerprint detection light 32 is transmitted through an optical path to an optical fingerprint sensor 5 for optical fingerprint imaging, so as to obtain a fingerprint image. Further, matching and verification are performed on the fingerprint image to implement an optical fingerprint recognition function.

An electronic device to which the light spot display method provided in this application is applied may be a device such as a mobile phone (as shown in FIG. 1), a tablet computer, a handheld computer, a netbook, a personal digital assistant (Personal Digital Assistant, PDA), or a wearable electronic device. The handheld electronic device to which the light spot display method is applied is not limited to a specific form in this application.

FIG. 3 is a schematic structural diagram of an electronic device according to an embodiment of this application.

As shown in FIG. 3, the electronic device may include a processor 110, an internal memory 120, a display 130, a touch sensor 140, and a fingerprint sensor 150.

It can be understood that the structure illustrated in this embodiment does not constitute any specific limitation on the electronic device. In some other embodiments, the electronic device may include more or fewer components than shown in the figure, or combine some components, or split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be separate devices or may be integrated into one or more processors.

A controller may be a nerve center and command center of the electronic device. The controller may generate an operation control signal according to an instruction operation code and a timing signal to complete control of instruction fetching and execution.

The processor 110 may be further provided with a memory for storing instructions and data. In some embodiments, the memory in the processor 110 is a cache memory. The memory may store instructions or data just used or repeatedly used by the processor 110. If the processor 110 needs to use the instructions or data again, the processor 110 may directly invoke the instructions or data from the memory. This avoids repeated access and reduces waiting time of the processor 110, thereby improving system efficiency.

In some embodiments, the processor 110 may include one or more interfaces. The interface may include an integrated circuit (inter-integrated circuit, I2C) interface, a mobile industry processor interface (mobile industry processor interface, MIPI), a general-purpose input/output (general-purpose input/output, GPIO) interface, and the like.

The I2C interface is a bidirectional synchronous serial bus and includes a serial data line (serial data line, SDA) and a serial clock line (derail clock line, SCL). In some embodiments, the processor 110 may include multiple I2C buses. The processor 110 may be coupled to the fingerprint sensor 150, the touch sensor 140, and the like through different I2C bus interfaces. For example, the processor 110 may be coupled to the touch sensor 140 through the I2C interface, so that the processor 110 and the touch sensor 140 communicate through the I2C bus interface to implement a touch function of the electronic device.

The MIPI interface may be configured to connect the processor 110 to a peripheral device such as the display 130. The MIPI interface includes a display serial interface (display serial interface, DSI) or the like. In some embodiments, the processor 110 communicates with the display 130 through the DSI interface, thereby implementing a display function of the electronic device.

The GPIO interface may be configured through software. The GPIO interface may be configured as a control signal or a data signal. In some embodiments, the GPIO interface may be configured to connect the processor 110 to the display 130, the touch sensor 140, the fingerprint sensor 150, and the like. The GPIO interface may alternatively be configured as an I2C interface, an I2S interface, a UART interface, an MIPI interface, or the like. The UART interface is a universal serial data bus used for asynchronous communication.

It can be understood that an interface connection relationship between the modules shown in this embodiment is merely an example for description, and does not constitute any limitation on the structure of the electronic device. In some other embodiments of this application, the electronic device may alternatively use an interface connection manner different from that in the foregoing embodiment, or a combination of a plurality of interface connection manners.

The internal memory 120 may be configured to store computer-executable program code. The executable program code may include an operating system, an application program required by at least one function (for example, a sound play function or an image play function), and the like. The executable program code includes instructions. The processor 110 runs the instructions stored in the internal memory 120 to enable the electronic device to execute various functional applications and data processing. For example, in this embodiment, by executing the instructions in the internal memory 120, the processor 110 enables the electronic device to perform the light spot display method provided in the embodiments of this application.

The internal memory 120 may include a storage program area and a storage data area. The storage program area may store computer-executable program code. The data storage area may store data (for example, audio data or contacts) and the like that are created during use of the electronic device. In addition, the internal memory 120 may include a high-speed random access memory, or may include a non-volatile memory such as at least one magnetic disk storage device, a flash memory device, and a universal flash storage (universal flash storage, UFS).

The electronic device implements a display function by using the GPU, the display 130, the application processor, and the like. The GPU is an image processing microprocessor and is connected to the display 130 and the application processor. The GPU is configured to perform mathematical and geometric computation graphics rendering. The processor 110 may include one or more GPUs that execute program instructions to generate or change display information.

The display 130 is configured to display an image, a video, and the like. The display 130 includes a display panel.

The display 130 of the electronic device can display a series of graphical user interfaces (graphical user interface, GUI), and these GUIs all are a main screen of the electronic device. Generally, the display 130 of the electronic device is fixed in size, and therefore only a limited quantity of controls can be displayed on the display 130 of the electronic device. As a GUI element, a control is a software component in an application program, and controls all data processed by the application program and interaction operations relating to such data. A user can interact with a control through direct manipulation (direct manipulation) so as to read or edit information related to the application program. In general, controls may include icons, buttons, menus, tabs, text boxes, dialog boxes, status bars, navigation bars, widgets, and other visual interface elements.

For example, in this embodiment of this application, the display 130 may show a user a fingerprint recognition prompt icon in a fingerprint collection zone, for example, a fingerprint pattern displayed in a fingerprint detection zone 2 shown in (a) of FIG. 1.

In this embodiment of this application, the display 130 needs to serve as a light source for fingerprint detection. Therefore, a display panel of the display 130 is a self-luminous display panel. The self-luminous display panel can control each display pixel (also referred to as a display unit) to emit light independently.

In this embodiment of this application, the display pixels of the self-luminous display are controlled to emit light with a specific brightness, so as to display a light spot with a specific brightness in the fingerprint detection zone. Light emitted by this light spot is used as a light source for fingerprint detection.

For example, the self-luminous display may include but is not limited to an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oled, a quantum dot light emitting diode (quantum dot light emitting diode, QLED), and the like. In some embodiments, the electronic device may include one or N displays 130, where N is a positive integer greater than 1.

The touch sensor 140 is also referred to as a "touch sensor panel" or "touch device". The touch sensor 140 may be disposed on the display 130, and the touch sensor 140 and the display 130 form a touchscreen (Touch Panel), also referred to as a "touch screen". The touch sensor 140 is configured to detect a touch operation performed on or near the touch sensor 140. The touch sensor may transmit a detected touch operation to the application processor to determine a touch event type. A visual output related to the touch operation may be provided by using the display 130.

In some other embodiments, the touch sensor 140 may alternatively be disposed on a surface of the electronic device, or disposed in a position different from the display 130.

The fingerprint sensor 150 is configured to collect a fingerprint. The electronic device may implement fingerprint unlock, application access lock, fingerprint photographing, fingerprint-based call answering, and the like by using characteristics of the collected fingerprint.

In this embodiment of this application, the under-screen fingerprint recognition technology is adopted. Light emitted by a light spot as light for fingerprint detection irradiates a finger on the display, and is reflected and scattered by the finger to obtain fingerprint detection light carrying fingerprint information. The fingerprint detection light is transmitted through the display 130 to the fingerprint sensor 150 under the display 130. The fingerprint sensor 150 receives the fingerprint detection light and converts it into a corresponding electrical signal, so as to generate a fingerprint image signal.

The fingerprint sensor 150 may be an optical fingerprint sensor. The optical fingerprint sensor may be provided under the self-luminous display to receive the fingerprint detection light carrying the fingerprint information. The fingerprint detection light is transmitted to an optical sensing array in the optical fingerprint sensor for optical fingerprint imaging, and an imaging result is converted into a corresponding electrical signal, that is, the fingerprint image signal.

In addition, an operating system runs on the foregoing components, for example, the android open source operating system developed by Google, the Windows operating system developed by Microsoft, the Harmony operating system (Harmony OS) developed by Huawei, or the iOS operating system developed by Apple. An application program may be installed and run on the operating system.

The operating system of the electronic device may use a layered architecture, an event-driven architecture, a microkernel architecture, a microservice architecture, or a cloud architecture. In the embodiments of this application, a software structure of the electronic device is described by using an android system with a layered architecture as an example.

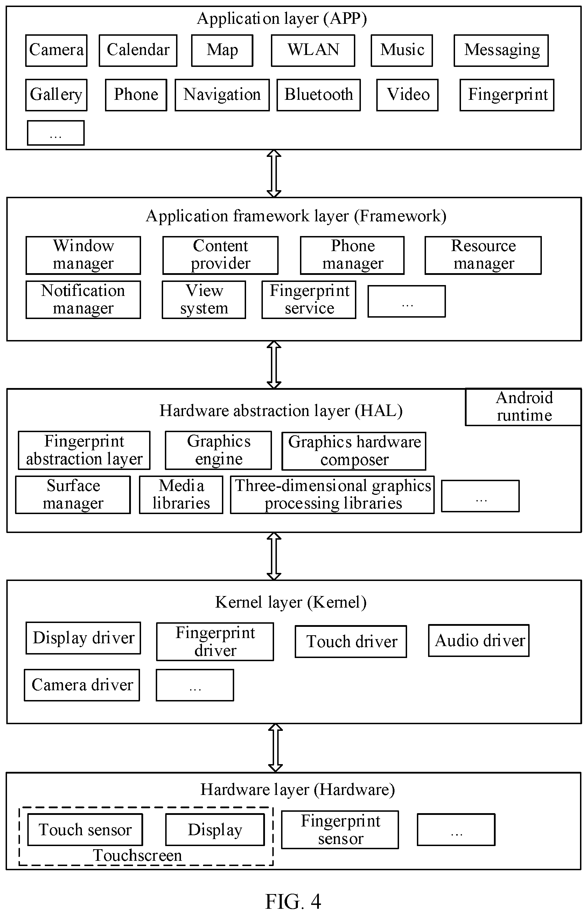

FIG. 4 is a block diagram of a software structure of an electronic device according to an embodiment of this application.

In a layered architecture, software is divided into several layers, and each layer has clear roles and responsibilities. The layers communicate with each other through software interfaces. The android system is used as an example. In some embodiments, the android system is divided into four layers: an application layer (application, APP), an application framework layer (Framework), a hardware abstraction layer (hardware abstraction layer, HAL), and a kernel layer (kernel) from top to bottom.

The application layer may include a series of application packages. In this embodiment of this application, the application package may include fingerprint recognition related applications such as fingerprint recognition. For example, the fingerprint recognition may be used for fingerprint unlock, application lock access, fingerprint photographing, and fingerprint-based call answering. Optionally, as shown in FIG. 4, the application packages may include applications such as camera, gallery, calendar, phone, map, navigation, WLAN, Bluetooth, music, videos, and messaging.

The application framework layer (Framework) provides an application programming interface (application programming interface, API) and a programming framework for application programs at the application layer. The application framework layer includes some predefined functions. In this embodiment of this application, as shown in FIG. 4, the application framework layer may include a fingerprint service (fingerprint service, FP service). The application framework layer can provide an API related to the fingerprint recognition function for the fingerprint recognition application of the application layer, and provide a fingerprint service for the fingerprint recognition application to implement the fingerprint recognition function. Optionally, as shown in FIG. 4, the application framework layer may further include a window manager, a content provider, a view system, a phone manager, a resource manager, a notification manager, and the like.

The hardware abstraction layer (HAL), or android runtime (Android Runtime), is responsible for scheduling and management of the android system and includes core libraries and virtual machines.

The core libraries include functional functions that the java language needs to call and core libraries of Android.

The application layer and the application framework layer run on the virtual machine. The virtual machine executes java files of the application layer and the application framework layer as binary files. The virtual machine is used to perform functions such as object lifecycle management, stack management, thread management, security and exception management, and garbage collection.

The system libraries may include a plurality of functional modules, for example, a fingerprint abstraction layer (fingerprint HAL), a graphics engine, and a graphics hardware composer (hardware composer).

The fingerprint abstraction layer is used to report a fingerprint event to a fingerprint service of the application framework layer.

The graphics engine is a rendering engine for image rendering, for example, surface flinger or Skia Graphics Library.

The graphics hardware composer is a driver abstraction layer of a dedicated chip for layer compositing. For example, in this embodiment of this application, the graphics hardware composer is used to connect the graphics engine to the display driver. In other words, the graphics hardware composer is a communication bridge between the graphics engine and the display driver, so as to transmit layers drawn by the graphics engine to the display driver for display.

Optionally, the system libraries may further include a surface manager (surface manager), media libraries (media libraries), three-dimensional graphics processing libraries (for example, OpenGL ES), and the like.

The surface manager is used to manage a display subsystem and provide fusion of 2D and 3D graphic layers for a plurality of application programs. The three-dimensional graphics processing libraries are used to implement three-dimensional graphics drawing, image rendering and compositing, graphic layer processing, and the like.

The kernel layer is a layer between hardware and software. In this embodiment of this application, the kernel layer includes at least a display driver and a sensor driver. The sensor driver includes a touch sensor driver, also referred to as a touch driver (touch panel driver), and a fingerprint sensor driver, also referred to as a fingerprint driver (fingerprint driver). Optionally, the kernel layer may further include a camera driver, an audio driver, and the like.

The driver module of the kernel layer is configured to obtain data reported by one or more sensors of the hardware layer (Hardware), process the data, and report a processing result to the hardware abstraction layer.

In this embodiment of this application, the hardware layer may include hardware modules such as a sensor module and a display. In this embodiment of this application, the sensor module includes at least a touch sensor and a fingerprint sensor. The touch sensor and the display constitute a touchscreen. The fingerprint sensor is configured to obtain a fingerprint image.

It should be noted that although the android system is used as an example for description in this embodiment of this application, the basic principles thereof also apply to electronic devices using an operating system such as the Harmony operating system (Harmony OS), iOS, or Windows.

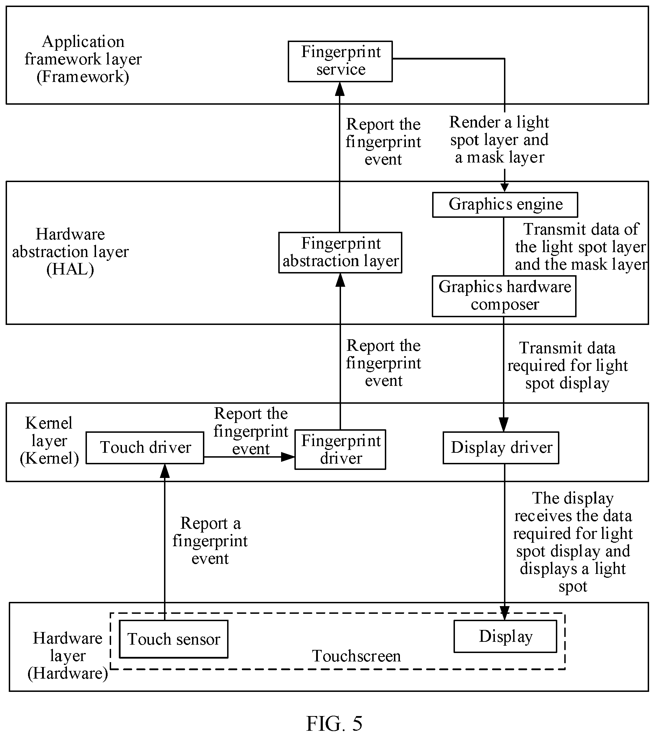

With reference to FIG. 5, the following describes an example of a process of how software and hardware of an electronic device work in a light spot display scenario in the related art.

After detecting a touch operation in the fingerprint detection zone, the touch sensor generates a fingerprint event, and reports the fingerprint event to the touch driver. Then, the fingerprint event is transmitted to the fingerprint service through the path of touch driver-fingerprint driver→fingerprint abstraction layer→fingerprint service.

The fingerprint service handles light spot display logic, that is, renders a light spot layer and a mask layer. Based on data required for light spot display, that is, the light spot layer, the mask layer, and fingerprint scenario mark information, the display driver controls the display to light up the display and display the light spot layer and the mask layer, that is, display a light spot on the display.

During study of this application, the inventors have found that in a light spot display process of the related art, it takes a long time to report a fingerprint event layer by layer and deliver light spot display data layer by layer, leading to a time-consuming light spot display process and a low speed of responding to the fingerprint event. To resolve this technical problem, the inventors propose a light spot display method that breaks through the conventional thinking of reporting fingerprint events layer by layer and delivering light spot display data layer by layer. In the method, after detecting a fingerprint event, a fingerprint driver directly transmits the fingerprint event to a display driver, and the display driver controls a display to display a light spot. According to this solution, no light spot layer or mask layer needs to be rendered at a logic display layer, sparing the need of reporting a fingerprint event layer by layer to the fingerprint service and then delivering light spot display data by the fingerprint service layer by layer, thereby reducing time spent on layer-by-layer event reporting and layer-by-layer instruction delivery. This significantly reduces time spent on a process from finger tapping on a fingerprint detection zone to displaying of a light spot, increases a speed of responding to a fingerprint event, and reduces time of an entire fingerprint recognition process.

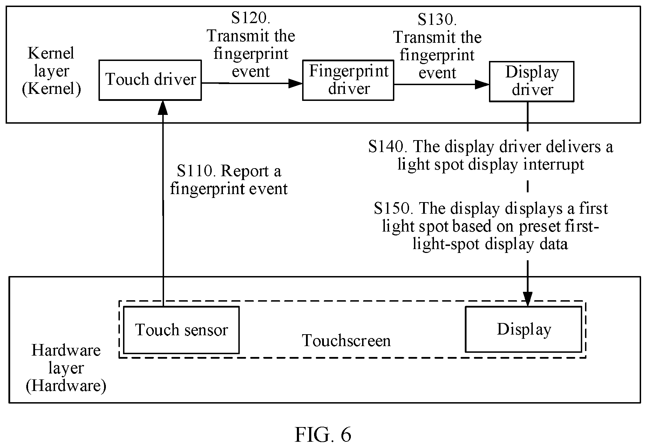

The light spot display process provided in the embodiments of this application is described in detail below with reference to FIG. 6, and this embodiment is described by using an android-based electronic device as an example.

As shown in FIG. 6, the light spot display method may include the following steps.

S 110. After detecting a touch operation in a fingerprint detection zone, a touch sensor generates a fingerprint event, and reports the fingerprint event to a touch driver.

A touchscreen includes the touch sensor and a display. When a finger taps on the fingerprint detection zone of the touchscreen, the touch sensor detects the touch operation and generates a fingerprint event, and reports the fingerprint event to the touch driver.

S 120. After receiving the fingerprint event, the touch driver transmits the fingerprint event to a fingerprint driver.

After receiving the fingerprint event reported by the touch sensor, the touch driver continues to transmit the fingerprint event to the fingerprint driver.

S130. After receiving the fingerprint event, the fingerprint driver transmits the fingerprint event to a display driver through a transmit path between the fingerprint driver and the display driver.

After receiving the fingerprint event, the fingerprint driver directly transmits the fingerprint event to the display driver. For example, the fingerprint driver directly uses the transmit path between the fingerprint driver and the display driver to transmit the fingerprint event to the display driver. The transmit path is a communication connection between two functional modules for transmitting data through a software interface.

In a possible implementation of this application, the fingerprint event is transmitted through an existing transmit path between the fingerprint driver and the display driver. In other words, the fingerprint event is transmitted through a transmit path for transmitting another type of data between the fingerprint driver and the display driver.

The existing transmit path between the fingerprint driver and the display driver is a connection between any two software interfaces of the fingerprint driver and the display driver, where a communication connection has been established for the two software interfaces. For example, a communication connection has been established between a software interface A of the fingerprint driver and a software interface B of the display driver, and the communication connection is also used to transmit the fingerprint event.

In another possible implementation, a new transmit path may be established between the fingerprint driver and the display driver, and the fingerprint event is transmitted to the display module through the transmit path. The transmit path may be used to transmit only fingerprint events.

In an example, the establishing a new transmit path may be developing a new software interface for at least one of the fingerprint driver and the display driver, and establishing a communication connection between the new software interface and a software interface of the other module.

For example, a new software interface a is developed for the fingerprint driver, and a communication connection is established between the software interface a and an original software interface B of the display driver. For another example, a new software interface b is developed for the display driver, and a communication connection is established between the software interface b and an original software interface A of the fingerprint driver. For still another example, a new software interface a is developed for the fingerprint driver, a new software interface b is developed for the display driver, and a communication connection is established between the software interface a and the software interface b.

In another example, a communication connection is established between two original software interfaces that are of the fingerprint driver and the display driver and that have no communication connection established, and the communication connection is a new transmit path between the fingerprint driver and the display driver.

For example, if an original software interface C of the fingerprint driver and an original software interface B of the display driver originally have no communication connection therebetween, and a communication connection is established between the software interface C and the software interface B, and this communication connection is a new transmit path between the fingerprint driver and the display driver.

S 140. The display driver transmits a light spot display interrupt to the display in response to the fingerprint event.

An event processing method corresponding to the fingerprint event is preset in the display driver. After receiving the fingerprint event, the display driver performs the event processing method to generate a light spot display interrupt, and transmits the light spot display interrupt to the display of a hardware layer.

S 150. In response to the light spot display interrupt, the display controls display statuses of display pixels based on first-light-spot display data preset in the display, so as to display a first light spot.

The display herein is a display chip. In this embodiment, the display has initial first-light-spot display data. For example, the first-light-spot display data has been written into the display before delivery.

The first-light-spot display data is data that can control display statuses of display pixels of the display. In other words, the first-light-spot display data is data that the display can read.

The display has been preconfigured with an event processing method corresponding to the light spot display interrupt. Therefore, after receiving the light spot display interrupt, the display performs the event processing method. To be specific, the display reads the first-light-spot display data from the display, and further controls, based on the first-light-spot display data, the display statuses of the display pixels of the display, such as display brightness and display color, so as to finally display a light spot on the display, that is, the first light spot.

In an example embodiment, the first-light-spot display data includes a light spot position, color, shape, and size. For example, the light spot position may be position coordinates of the center of a light spot on the entire display, and the position coordinates may be represented by pixel positions. The shape and size may be expressed in pixels, for example, a circular zone with the center of the spot as the center and having a diameter of n pixels. The color may be expressed in RGB color values.

The light spot position may be determined based on a position of the fingerprint detection zone. Generally, the light spot position is located in the fingerprint detection zone. The position of the fingerprint detection zone depends on the position of the fingerprint sensor. In addition, the area relationship between the light spot display zone and the fingerprint detection zone is not limited in this application. Generally, to obtain a clear fingerprint image, the area of the light spot is larger than the area of the fingerprint detection zone.

The light spot shape may be set depending on an actual need. Considering that the fingerprint of fingers is usually an ellipse, the light spot zone may be circular, elliptical, annular, or of any other shapes. This is not particularly limited in this application. The light spot color is usually white, and certainly may be other colors. This is not particularly limited in this application.

For example, the display determines the light spot display zone on the display based on the light spot position, shape and size, and further controls a display brightness of the display pixels in the light spot display zone of the display to reach a specific brightness and turn into a specified color, for example, white, and display pixels in another zone to stay unlit, so as to finally display a white light spot on the display.

The brightness of the display pixels in the light spot display zone may be used as an event processing parameter that is preset in the display and that corresponds to the light spot display interrupt, or may be used as a parameter in the first-light-spot display data.

In another embodiment of this application, the first-light-spot display data may be preset in the display driver. To be specific, a display driver program initially has the first-light-spot display data.

The display driver is preconfigured with an event processing method corresponding to the fingerprint event. After receiving the fingerprint event transmitted by the fingerprint driver, the display driver performs the event processing method to generate the light spot display interrupt, reads the first-light-spot display data from the display driver, and delivers the light spot display interrupt and the first-light-spot display data to the display. In response to the light spot display interrupt, the display performs an operation matching the interrupt, that is, controls the display statuses of the display pixels in the display by using the first-light-spot display data received, so as to display a light spot on the display.

In still another embodiment of this application, for the following two different application scenarios, the display driver performs different operations after receiving the fingerprint event.

In one application scenario, the display driver is preset with the first-light-spot display data, and the display has no first-light-spot display data.

In such scenario, after receiving the fingerprint event, the display driver generates the light spot display interrupt, reads the first-light-spot display data, and transmits the first-light-spot display data and the light spot display interrupt to the display. The display directly uses the first-light-spot display data transmitted by the display driver to control the display to display a light spot.

In the other application scenario, the first-light-spot display data is preset in the display driver, the first-light-spot display data is also preset in the display, and a priority of the first-light-spot display data in the display driver is higher than a priority of the first-light-spot display data in the display. For example, after the electronic device leaves the factory, the first-light-spot display data adjusted is written into the display driver, and the first-light-spot display data in the electronic device is updated by updating the display driver in the electronic device. The display is preset with the first-light-spot display data before delivery.

In such application scenario, after receiving the fingerprint event, the display driver generates the light spot display interrupt, and reads the first-light-spot display data in the display driver. Further, the display driver delivers the light spot display interrupt and the first-light-spot display data to the display. After receiving the light spot display interrupt and the first-light-spot display data, the display directly uses the first-light-spot display data delivered by the display driver to control the display to display a light spot.

In the light spot display method provided in this embodiment, after detecting the fingerprint event, the fingerprint driver directly transmits the fingerprint event to the display driver, and the display driver transmits the light spot display interrupt to the display. The display is preset with the first-light-spot display data, and the display directly controls, based on the first-light-spot display data, the display pixels in the display to display the first light spot. In this process, no light spot layer or mask layer needs to be rendered, sparing the need of reporting a fingerprint event layer by layer to the fingerprint service and then delivering light spot display data by the fingerprint service layer by layer, thereby reducing time spent on layer-by-layer event reporting and layer-by-layer instruction delivery. This significantly reduces time spent on a process from finger tapping on a fingerprint detection zone to displaying of a light spot, increases a speed of responding to a fingerprint event, and reduces time of an entire fingerprint recognition process.

In addition, in this solution, the first-light-spot display data is directly preset in the display. In this way, the display driver needs to transmit only the light spot display interrupt to the display, and does not need to transmit other types of data. This lowers transmission performance requirement on a software interface between the display driver and the display.

Further, in this solution, the display pixels in the light spot display zone of the display are directly controlled to be lit up, and pixels in other zones do not need to be lit up. This reduces power consumption in displaying a light spot on the display.

In addition, in other embodiments of this application, the first-light-spot display data may alternatively be preset in the display driver so that the first-light-spot display data can be dynamically adjusted depending on an actual application requirement, thereby dynamically adjusting a finally displayed light spot.

In the process of implementing the foregoing light spot display method, the inventors have found that a light spot displayed in the foregoing method may have display defect phenomena such as an irregular edge shape or an unintended edge color. To further resolve the technical problem, the inventors have found through further research that the reason for the above phenomena lies in low display precision of displays. For this reason, the inventors propose another light spot display method in the process of studying this application. In this method, a light spot (a second light spot) rendered at a logic display layer is used to cover the light spot (the first light spot) displayed on the display, so that the display defects of the first light spot are corrected, making the shape and color of the finally displayed light spot consistent with the specified parameters.

The framework layer of the electronic device can implement an architecture in which the display and the logic display layer (logic display) are separate. The logic display layer includes specific display content on the display, and the display is configured to display all or part of the display content of the logic display layer. In this application, the display content of the logic display layer is the second light spot including a light spot layer and a mask layer.

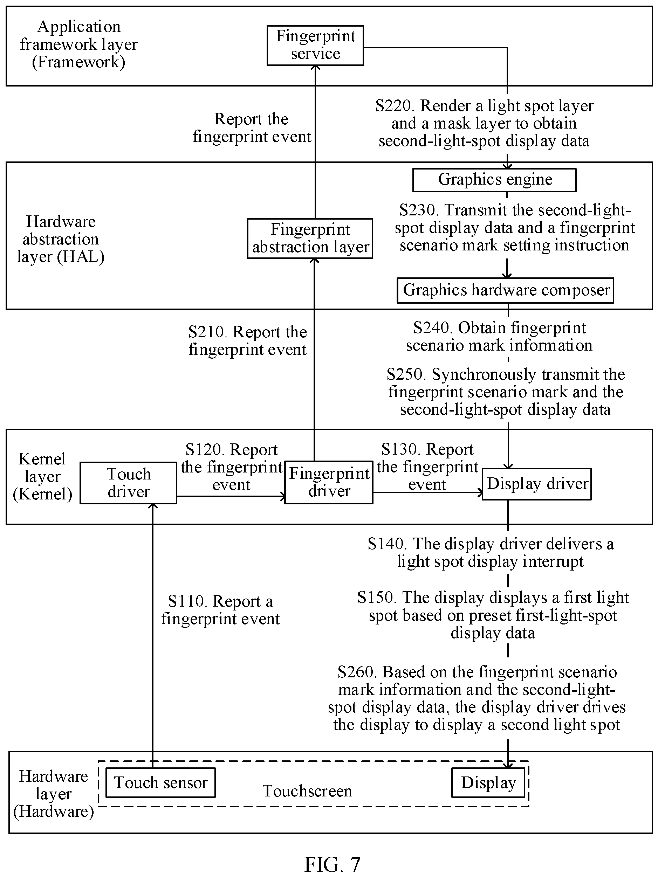

As shown in FIG. 7, this method may further include the following steps on the basis of the foregoing light spot display method embodiment.

S210. After receiving the fingerprint event, the fingerprint driver transmits the fingerprint event to a fingerprint service layer by layer.

In this embodiment of this application, after receiving the fingerprint event, the fingerprint driver transmits the fingerprint event to a fingerprint abstraction layer, and the fingerprint abstraction layer continues to transmit the fingerprint event to the fingerprint service of the application framework layer.

S220. The fingerprint service obtains light spot data in response to the fingerprint event, renders layers for light spot display based on the light spot data to obtain second-light-spot display data, and transmits the second-light-spot display data to the graphics engine.

The light spot data is original data for rendering layers for light spot display (for example, a light spot layer and a mask layer), and for example may include a light spot position, size, shape, color, and the like. The second-light-spot display data is display content obtained through rendering based on the light spot data, that is, resulting data obtained from rendering of the layers for light spot display. The display driver may display a light spot based on the second-light-spot display data. For example, a light spot radius is set to 5 mm and a color is set to white in the light spot data, and a light spot radius is the number of pixels corresponding to 5 mm and a light spot color is RGB color values corresponding to white in the second-light-spot display data.

In an example embodiment, the light spot data may be preset in the fingerprint driver. The fingerprint abstraction layer may read the light spot data by calling an interface of the fingerprint driver. Further, the fingerprint service may read the second-light-spot display data from the fingerprint abstraction layer. For example, the fingerprint service obtains the second-light-spot display data by calling an interface of the fingerprint abstraction layer.

In an example embodiment, the fingerprint service is configured with a fingerprint event processing method. After receiving the fingerprint event, the fingerprint service performs the fingerprint event processing method, to be specific, reads the light spot data from the fingerprint abstraction layer, and renders layers for light spot display based on the light spot data, that is, a light spot layer and a mask layer, so as to obtain the second-light-spot display data.

Further, the fingerprint service transmits the second-light-spot display data to the graphics engine (SurfaceFlinger) for layer blending, that is, layer blending of the light spot layer and the mask layer, or superimposition of the light spot layer and the mask layer. The graphics engine is the two-dimensional graphics engine shown in FIG. 4. Certainly, other modules with a layer blending function can also be used. This is not limited herein.

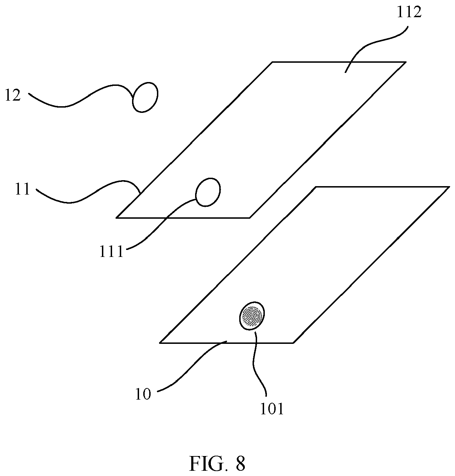

As shown in FIG. 8, a light spot rendered includes a light spot layer 12 located in the fingerprint detection zone of the display 10. When a finger taps on the fingerprint detection zone, light emitted by the display at this zone serves as a light source for fingerprint recognition. A mask layer 11 is used to cover all zones on the display 10 except the light spot layer 12, and block light emitted by the display so as to avoid damage to human eyes caused by bright light.

The mask layer 11 includes a hollow carved zone 111 and a non-hollow carved zone 112. The light spot layer 12 is embedded in the hollow carved zone 111. In addition, the light spot layer 12 can cover the entire hollow carved zone 111 of the mask layer.

Correspondingly, the second-light-spot display data includes mask layer data and light spot layer data. The light spot layer data includes information such as a position, color, shape, and size of the light spot layer. The mask layer data includes a shape, position, and size of the hollow carved zone, as well as a color of the non-hollow carved zone. The hollow carved zone and the light spot layer are the same in position, shape, and size to ensure that the light spot layer covers the entire hollow carved zone of the mask layer.

For example, the light spot layer may be white or other colors close to white to allow light to pass through. The non-hollow carved zone of the mask layer may be black or other colors close to black to block light.

In addition, for information such as the position, shape, and size of the light spot layer, refer to the relevant content of the first-light-spot display data. Details are not described herein again.

S230. The graphics engine transmits the second-light-spot display data and a fingerprint scenario mark setting instruction to a graphics hardware composer.

In this embodiment, the graphics engine and the graphics hardware composer constitute a graphics processing module. Certainly, in an electronic device using other operating systems, the graphics processing module may be other program modules, which is not limited in this application.

The graphics hardware composer is a driver abstraction layer of a layer composition chip and used to connect the graphics engine and the display driver. To be specific, data transmitted by the graphics engine needs to be transmitted to the display driver through the graphics hardware composer.

After detecting that the second-light-spot display data received includes the mask layer, the graphics engine transmits the fingerprint scenario mark setting instruction to the graphics hardware composer. This instruction is used to enable the graphics hardware composer to set the fingerprint scenario mark information to information indicating that a current display scenario is a fingerprint scenario.

The graphics engine transmits the second-light-spot display data and the fingerprint scenario mark setting instruction to the graphics hardware composer (Hardware Composer) through a transmit path between the graphics engine and the graphics hardware composer.

The transmit path between the graphics engine and the graphics hardware composer may be a communication connection between software interfaces of the graphics engine and the graphics hardware composer. That is, the graphics engine transmits the second-light-spot display data and the fingerprint scenario mark setting instruction to the graphics hardware composer by calling an interface of the graphics hardware composer.

Moreover, the transmit path between the graphics engine and the graphics hardware composer may be an original software interface connection between the graphics engine and the graphics hardware composer, or may be a new software interface connection between the graphics engine and the graphics hardware composer. Details are not described herein.

S240. The graphics hardware composer obtains fingerprint scenario mark information in response to the fingerprint scenario mark setting instruction.

The fingerprint scenario mark information is a mark parameter, and this mark parameter is used as an initialization parameter in code of the graphics hardware composer. After receiving the fingerprint scenario mark setting instruction, the graphics hardware composer assigns the mark parameter a value indicating that a current display scenario is a fingerprint scenario.

For example, a binary value "1" indicates that the current display scenario is a fingerprint recognition scenario, and a binary number "0" indicates that the current display scenario is not a fingerprint recognition scenario. Certainly, the fingerprint scenario mark information may alternatively be other information that can serve as a mark.

In other possible implementations, the fingerprint scenario mark information may alternatively be stored in a database that can be read and written by the graphics hardware composer. When necessary, the fingerprint scenario mark information can be directly read from the database. This is not particularly limited in this application.

The fingerprint scenario mark information is used to indicate that the current display scenario is a fingerprint recognition scenario. In the fingerprint recognition scenario, the display driver controls the entire display to enter highlight mode. To be specific, in the highlight mode, the entire display zone of the display is lit up and reaches a specific brightness, that is, the entire display is lit up and reaches a specific brightness. For example, the brightness in the highlight mode reaches 1000 nit, where nit is the unit of brightness, and 1 nit represents luminous intensity per unit area, that is, the intensity of light reflected by an object and perceived by naked eyes from a direction.

S250. The graphics hardware composer synchronously transmits the fingerprint scenario mark information and the second-light-spot display data to the display driver.

In an example embodiment, the graphics hardware composer simultaneously transmits the fingerprint scenario mark information and the second-light-spot display data to the display driver through a same transmit path, thereby ensuring that the display driver synchronously receives the fingerprint scenario mark information and the second-light-spot display data.

Similar to the transmit path between the fingerprint driver and the display driver, the transmit path between the graphics hardware composer and the display driver is a communication connection between software interfaces of the graphics hardware composer and the display driver. Moreover, the transmit path between the graphics hardware composer and the display driver may be an original software interface connection between the graphics hardware composer and the display driver, or may be a new software interface connection between the graphics hardware composer and the display driver. Details are not described herein.

In an example embodiment, the graphics hardware composer may write the fingerprint scenario mark information and the second-light-spot display data into a same transmit queue, and transmit data in the transmit queue through a same transmit path. A time difference in transmitting different data in a same transmit queue is so negligibly small that the data in the same transmit queue is considered to be simultaneously transmitted. Moreover, it takes the same time to transmit two pieces of data in the same transmit path, and therefore the display driver can simultaneously receive the fingerprint scenario mark information and the second-light-spot display data.

S260. Based on the fingerprint scenario mark information and the second-light-spot display data, the display driver drives the display to display the second light spot.

Before the display displays the second light spot, the display has controlled, based on the first-light-spot display data, the display statuses of the display pixels of the display to display the first light spot, a light spot 101 displayed on the display 10 in FIG. 8.

For example, display pixels in a zone at which the light spot 101 is located are controlled to be highlighted, and display pixels in a zone outside the light spot 101 are not lit up or are lit up at a very low brightness, so as to display the light spot 101 (that is, the first light spot) on the display.

After receiving the fingerprint scenario mark information and the second-light-spot display data, the display driver controls, based on the fingerprint scenario mark information, the entire display to enter the highlight display mode. That means the zone outside the light spot 101 is also in the highlight display mode. Further, the display driver displays the light spot layer and the mask layer at the logic display layer based on the second-light-spot display data. To be specific, when the entire display is in the highlight mode, light emitted by the display can pass through the light spot layer to irradiate the finger on the fingerprint detection zone, so as to provide a light source for the fingerprint sensor to obtain a fingerprint image. In addition, the non-hollow carved zone of the mask layer can block bright light of the display, so that the second light spot is displayed on the display.

For example, if the light spot layer is white and the mask layer is black, when the display is in the highlight display mode, a display zone at which the light spot layer is located is displayed in white, and other zones are all black. In this way, a bright white light spot is displayed on the display.

As shown in FIG. 8, the light spot layer 12 is the same as the light spot 101 in position and shape. The light spot layer 12 is different from the light spot 101 in area. An area relationship between the light spot layer 12 and the light spot 101 may be determined depending on an actual application requirement.

In an application scenario, the light spot 101 is small in size and has an irregular edge shape or color. In such application scenario, the light spot layer 12 can be set to larger than the light spot 101 in area.

For example, if the light spot is circular, the diameter of the light spot layer 12 is larger than the diameter of the light spot 101, thereby ensuring that the light spot layer 12 can entirely cover an edge portion of the light spot 101. In addition, the mask layer 11 is used to cover other zones of the display to ensure that the shape and color of the finally displayed light spot meet specified requirements.

It can be learned from the foregoing that display parameters (for example, position, size, shape, and color) of the second light spot are not related to a display capability of the display. Therefore, the second light spot is used to cover the first light spot, so as to avoid presenting display defects of the first light spot to a user.

In other embodiments of this application, after receiving the second-light-spot display data delivered by the fingerprint service, the graphics engine may obtain the fingerprint scenario mark information, and synchronously transmit the fingerprint scenario mark information and the second-light-spot display data to the graphics hardware composer. Then, the graphics hardware composer continues to synchronously transmit the fingerprint scenario mark information and the second-light-spot display data to the display driver.

In this embodiment, the graphics engine is configured with a parameter indicating the fingerprint scenario mark information. This mark parameter is used as an initialization parameter in code of the graphics engine. After receiving the second-light-spot display data, the graphics engine assigns the mark parameter a value indicating that the current display scenario is a fingerprint scenario.

The fingerprint scenario mark information herein has the same meaning and form as the fingerprint scenario mark information in the graphics hardware composer. Details are not described herein again.

The graphics engine synchronously transmits the fingerprint scenario mark information and the second-light-spot display data to the graphics hardware composer in the same way as the graphics hardware composer synchronously transmits these two pieces of data to the display driver in S250. Details are not described herein again.

For example, the graphics engine may synchronously transmit the fingerprint scenario mark information and the second-light-spot display data through a same transmit path between the graphics engine and the graphics hardware composer. The transmit path may be an original transmit path between the graphics engine and the graphics hardware composer, or may be a new dedicated transmit path.

In an example, the graphics engine may write the fingerprint scenario mark information and the second-light-spot display data into a same transmit queue, and transmit data in the transmit queue through a same transmit path.

In the light spot display method provided in this embodiment, the fingerprint driver reports the fingerprint event layer by layer to the fingerprint service while transmitting the fingerprint event to the display driver, so that the fingerprint service handles light spot rendering logic, to be specific, renders the layers for light spot display at the logic display layer, so as to display the second light spot. Further, the second light spot is used to cover the first light spot displayed by a physical display layer, so as to conceal the display defects of the first light spot to finally present a light spot without display defects and improve the light spot display effect. In addition, in this solution, after the light spot of the physical display layer is displayed, a fingerprint recognition process is started, that is, collecting a fingerprint image and recognizing the fingerprint image. It can be learned that in this solution, time spent on the light spot display process depends on time spent in displaying the first light spot, and the time spent in displaying the first light spot is much shorter than time spent in displaying the second light spot. Therefore, this solution not only reduces time spent on the light spot display process and improves a speed of responding to fingerprint events, but also improves the light spot display effect and finally improves user experience in the fingerprint recognition process.

Further, the fingerprint scenario mark information and the second-light-spot display data are synchronously transmitted, thereby avoiding exception or delay in displaying the second light spot when the fingerprint scenario mark information and the second-light-spot display data are not synchronously received. Therefore, time spent on the display process of the second light spot is reduced, that is, the second light spot is displayed faster.

An embodiment of this application further provides another light spot display method. Different from the embodiment of FIG. 6, in this light spot display method, the fingerprint driver transmits the fingerprint event to the display driver via a fingerprint abstraction layer.

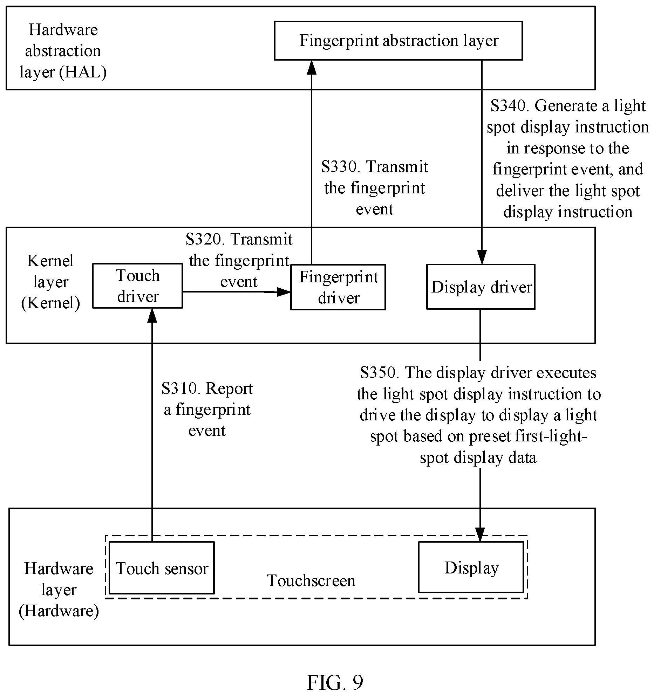

As shown in FIG. 9, the light spot display method provided in this embodiment may include the following steps.

S330. The fingerprint driver transmits the fingerprint event to the fingerprint abstraction layer.

S340. The fingerprint abstraction layer generates a light spot display instruction in response to the fingerprint event, and transmits the light spot display instruction to the display driver.

In an embodiment, a transmit path has been established between the fingerprint abstraction layer and the display driver. The fingerprint abstraction layer may transmit the light spot display instruction through the established transmit path between the fingerprint abstraction layer and the display driver.

The light spot display instruction is used to trigger the display driver to drive the display to display a light spot. In other words, after receiving the light spot display instruction, the display driver drives the display to display a light spot.

S350. The display driver executes the light spot display instruction to drive the display to display a light spot based on the preset first-light-spot display data.

After receiving the light spot display instruction, the display driver executes the light spot display instruction to light up the display pixels in the light spot display zone of the display, and keep other display pixels in a non-lit state. In other words, only the display pixels in the light spot display zone need to be lit up, and other display pixels do not need to be lit up.

The first-light-spot data contains the same information as the first-light-spot data in FIG. 6. Details are not described herein again.

Other steps such as S310 and S320 in FIG. 9 have the same implementation process as the corresponding steps in the embodiment of FIG. 6. Details are not described herein again.

In the light spot display method provided in this embodiment, after receiving the fingerprint event, the fingerprint abstraction layer generates the light spot display instruction in response to the fingerprint event, and delivers the light spot display instruction to the display driver. The display driver executes the light spot display instruction to drive the display to display the light spot based on the preset first-light-spot display data. To be specific, the display driver controls only the display pixels in the light spot display zone of the display to be lit up, and other display pixels do not need to be lit up. It can be learned that in this solution, display pixels corresponding to a light spot pattern on the display can be directly driven to be lit up, with no need to light up the entire display and cover the display with the layers rendered at the logic display layer to form a light spot pattern. This solution also spares the need of uploading the fingerprint event to the fingerprint service layer by layer and then delivering data for light spot display (that is, the light spot display data) layer by layer to the display driver by the fingerprint service. This reduces time spent on layer-by-layer event reporting and layer-by-layer instruction delivery, significantly reducing time spent on a process from finger tapping on a fingerprint detection zone to displaying of a light spot. In addition, in this solution, the display pixels in the light spot display zone of the display are directly controlled to be lit up, and display pixels in other zones do not need to be lit up. This reduces power consumption in displaying a light spot on the display.

In addition, an embodiment of this application further provides another light spot display method. Different from the embodiment of FIG. 7, in this light spot display method, the fingerprint driver transmits the fingerprint event to the display driver via a fingerprint abstraction layer.

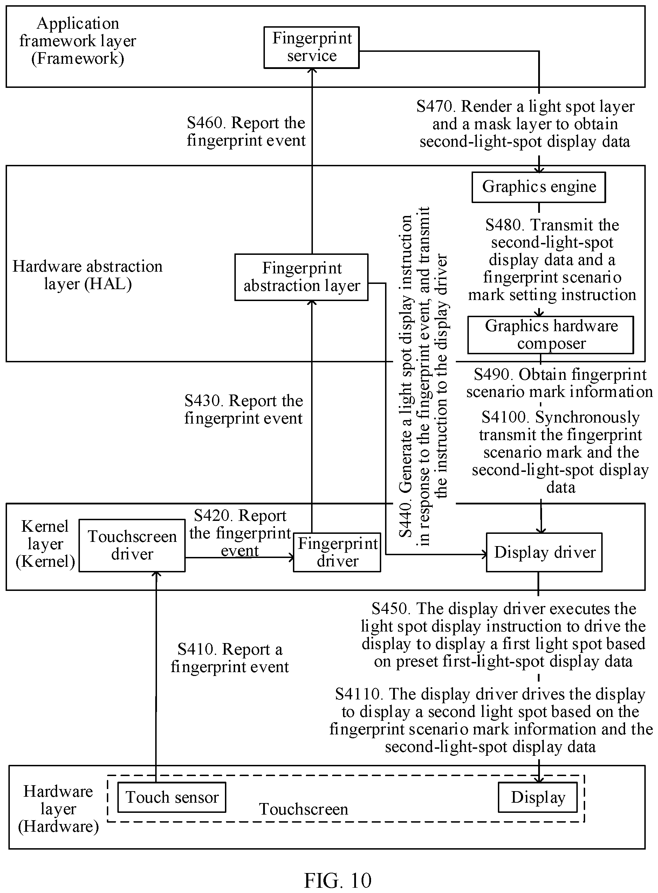

As shown in FIG. 10, the light spot display method provided in this embodiment may include the following steps.

S430. After receiving the fingerprint event transmitted by the touchscreen driver, the fingerprint driver transmits the fingerprint event to the fingerprint abstraction layer.

Step S430 has the same implementation process as S210 of FIG. 7. Details are not described herein again.

S440. The fingerprint abstraction layer generates a light spot display instruction in response to the fingerprint event, and transmits the light spot display instruction to the display driver.

Step S440 has the same implementation process as S340 of FIG. 9. Details are not described herein again.

In addition, the fingerprint abstraction layer also transmits the fingerprint event to the fingerprint service, so that the fingerprint service renders a light spot layer and a mask layer to obtain second-light-spot display data, and delivers the second-light-spot display data layer by layer to the display driver.

S450. The display driver executes the light spot display instruction to drive the display to display the first light spot based on the preset first-light-spot display data.

Step S450 has the same implementation process as S350 of FIG. 9. Details are not repeated herein again.

Other steps such as S410, S420, and S460 to S4110 in this embodiment have the same implementation process as the corresponding steps in the embodiment of FIG. 7. Details are not described herein again.

According to the light spot display method provided in this embodiment, in this solution, display pixels corresponding to a light spot pattern on the display can be directly driven to be lit up, with no need to light up the entire display and cover the display with the layers rendered at the logic display layer to form a light spot pattern. This solution also spares the need of uploading the fingerprint event to the fingerprint service layer by layer and then delivering data for light spot display (that is, the light spot display data) layer by layer to the display driver by the fingerprint service. This reduces time spent on layer-by-layer event reporting and layer-by-layer instruction delivery, significantly reducing time spent on a process from finger tapping on a fingerprint detection zone to displaying of a light spot. In addition, the fingerprint abstraction layer further transmits the fingerprint event to the fingerprint service, triggering the fingerprint service to render the layers for light spot display at the logic display layer and then deliver data for light spot layer display down layer by layer to the display driver. Finally, the second light spot covers the first light spot on the display, thereby concealing the display defects of the first light spot to finally present a light spot without display defects and improve the light spot display effect. In addition, in this solution, after the light spot of the physical display layer is displayed, a fingerprint recognition process is started, that is, collecting a fingerprint image and recognizing the fingerprint image. It can be learned that in this solution, time spent on the light spot display process depends on time spent in displaying the first light spot, and the time spent in displaying the first light spot is much shorter than time spent in displaying the second light spot. Therefore, this solution not only reduces time spent on the light spot display process and improves a speed of responding to fingerprint events, but also improves the light spot display effect and finally improves user experience in the fingerprint recognition process.

In the light spot display method provided in this application, after detecting the fingerprint event, the electronic device directly transmits, by using the fingerprint driver, the fingerprint event to the display driver; and in response to the fingerprint event, the display driver controls the touchscreen to display a light spot based on preset first-light-spot display data. Further, the light spot rendered at the logic display layer can also be used to conceal the display defects of the light spot displayed on the display. Although the foregoing embodiments of the light spot display method are described by using an android system as an example, this shall impose no limitation on the light spot display method provided in this application. The light spot display method provided in this application also applies to electronic devices based on other operating systems such as Harmony operating system (Harmony OS), iOS or Windows. For application requirements of different operating systems, for example, system frameworks of different operating systems and different light spot display logic, a person skilled in the art may adaptively change, based on the light spot display method provided in this application, light spot display logic in corresponding operating systems, or adaptively change, based on specific functions of function modules in other operating systems, a process of the light spot display method of this application, so as to achieve the same technical effects as the light spot display method of this application. For example, in other operating systems, a module having the same function as the fingerprint driver may be used to perform the process of the fingerprint driver, and a module having the same function as the display driver may be used to perform the process of the display driver. No more examples are provided herein.

In the embodiments of this application, the electronic device may be divided into function modules based on the examples of the light spot display method. For example, the function modules may be obtained through division based on functions, or two or more functions may be integrated into one processing module. The integrated module may be implemented in a form of hardware, or may be implemented in a form of a software functional module. It should be noted that, the division into modules in this embodiment of this application is an example, which is merely logical function based division. In actual implementation, another division manner may be used.

For a case that the function modules are obtained through division based on functions, FIG. 9 is a possible schematic diagram of a composition of a light spot display apparatus used the foregoing embodiments. The light spot display apparatus can perform the steps of any one of the method embodiments of FIG. 6 and FIG. 7 of this application. The light spot display apparatus is an electronic device, or a communication apparatus that supports an electronic device in implementing the method provided in the embodiments. For example, the communication apparatus may be a system on chip.

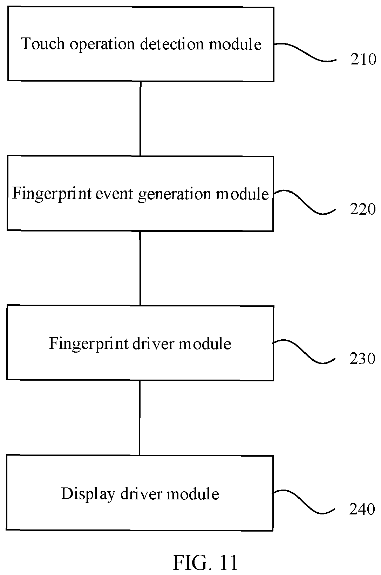

As shown in FIG. 11, the light spot display apparatus may include a touch operation detection module 210, a fingerprint event generation module 220, a fingerprint driver module 230, and a display driver module 240.

The touch operation detection module 210 is configured to perform detection on a touch operation in a fingerprint detection zone of a touchscreen.

When a finger taps on the fingerprint detection zone of the touchscreen, the touch operation detection module can detect the touch operation. The touchscreen includes a touch sensor and a display, and the touch operation detection module may be a function module integrated into the touch sensor.

The fingerprint event generation module 220 is configured to generate a fingerprint event in response to the touch operation.

In a possible embodiment, the fingerprint event generation module 220 may be a program function module integrated into the touch sensor, and generates the fingerprint event when detecting the touch operation.

The fingerprint driver module 230 is configured to directly transmit the fingerprint event to the display driver module.

The fingerprint driver module may be a fingerprint driver integrated into an operating system of the electronic device. After receiving the fingerprint event, the fingerprint driver module directly transmits the fingerprint event to the display driver module.

The display driver module 240 is configured to control, in response to the fingerprint event, the touchscreen to control display statuses of display pixels of the touchscreen based on preset first-light-spot display data, so as to display a light spot.

The display driver module may be a display driver integrated into the operating system of the electronic device. After receiving the fingerprint event transmitted by the fingerprint driver module, the display driver module triggers the touchscreen to control the display statuses of the display pixels of the touchscreen based on the preset first-light-spot display data, so as to finally display a light spot on the touchscreen.

It should be noted that all related content of the steps in the foregoing method embodiments may be cited in function descriptions of corresponding function modules. Details are not described herein again.

The light spot display apparatus provided in this embodiment of this application is configured to perform the light spot display method in any foregoing embodiment, and therefore can have the same effects as the light spot display method in the foregoing embodiments.

The embodiments further provide a computer-readable storage medium. The computer-readable storage medium includes instructions. When the instructions are run on an electronic device, the electronic device is enabled to perform relevant steps of the light spot display method embodiment of FIG. 6 or FIG. 7, so as to implement the light spot display method in the foregoing embodiments.

The embodiments further provide a computer program product including instructions. When the computer program product is run on an electronic device, the electronic device is enabled to perform relevant steps of the light spot display method embodiment of FIG. 6 or FIG. 7, so as to implement the light spot display method in the foregoing embodiments.

Based on the description of the foregoing implementations, a person skilled in the art may understand that, for convenience and brevity of description, division into the foregoing functional modules is merely an example for illustration. In actual application, the foregoing functions may be allocated to different functional modules and implemented as required. That is, an inner structure of an apparatus is divided into different functional modules to implement all or some of the functions described above. For a detailed working process of the foregoing system, apparatus, and unit, reference may be made to a corresponding process in the foregoing method embodiments. Details are not described herein again.

In the several embodiments provided in the embodiments, it should be understood that the disclosed system, apparatus, and method may be implemented in other manners. For example, the apparatus embodiment described above is merely an example for illustration. For example, the module or unit division is merely logical function division, and another division manner may be used in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network elements. Some or all of the units may be selected based on actual requirements to achieve the objectives of the solutions of the embodiments.

In addition, function units in the embodiments of this embodiment may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as a separate product, the integrated unit may be stored in a computer readable storage medium. Based on such an understanding, the technical solutions in the embodiments essentially, or the part contributing to the prior art, or all or some of the technical solutions may be implemented in the form of a software product. The software product is stored in a storage medium and includes several instructions for instructing a computer device (which may be a personal computer, a server, a network device, or the like) or a processor to perform all or some of the steps of the method described in the embodiments. The storage medium includes various media that can store program code such as a flash memory, a removable hard disk, a read-only memory, a random access memory, a magnetic disk, or an optical disc.

The foregoing descriptions are merely specific embodiments of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A light spot display method, applied to an electronic device with a touchscreen, wherein an operating system of the electronic device comprises a fingerprint driver and a display driver, and the method comprises:
receiving, by the fingerprint driver, a fingerprint event, wherein the fingerprint event is generated based on a touch operation in a detection zone of the touchscreen;
directly transmitting, by the fingerprint driver, the fingerprint event to the display driver; and
controlling, by the display driver in response to the fingerprint event, the touchscreen to display a first light spot based on preset first-light-spot display data.

2. The method according to claim 1, wherein the directly transmitting, by the fingerprint driver, the fingerprint event to the display driver comprises:
transmitting, by the fingerprint driver, the fingerprint event to the display driver through a transmit path between the fingerprint driver and the display driver.

3. The method according to claim 1 or 2, wherein the controlling, by the display driver in response to the fingerprint event, the touchscreen to display a first light spot based on preset first-light-spot display data comprises:
transmitting, by the display driver, a light spot display instruction to the touchscreen in response to the fingerprint event, wherein the light spot display instruction is used to enable the touchscreen to control display statuses of display pixels in the touchscreen based on the preset first-light-spot display data, to display the first light spot.

4. The method according to claim 3, wherein the first-light-spot display data comprises a light spot position, shape, size, and color; and
the light spot display instruction is used to enable the touchscreen to determine, based on the light spot position, shape, and size, a light spot display zone, and control a display brightness corresponding to display pixels in the light spot display zone to reach a specified brightness and a display color of the display pixels to change to the light spot color.

5. The method according to claim 3 or 4, wherein the transmitting, by the display driver, a light spot display instruction to the touchscreen in response to the fingerprint event comprises:
generating, by the display driver, a light spot display interrupt in response to the fingerprint event;
obtaining, by the display driver, the preset first-light-spot display data from the display driver; and
transmitting, by the display driver, the light spot display interrupt and the first-light-spot display data to the touchscreen.

6. The method according to claim 3 or 4, wherein the light spot display instruction is used to enable the touchscreen to obtain the preset first-light-spot display data from the touchscreen, and control the display statuses of the display pixels in the touchscreen based on the first-light-spot display data, to display the first light spot.

7. The method according to any one of claims 1 to 6, wherein the operating system of the electronic device further comprises a fingerprint service and a graphics processing module, and the method further comprises:
receiving, by the fingerprint service, the fingerprint event;
obtaining, by the fingerprint service, second-light-spot display data in response to the fingerprint event, wherein the second-light-spot display data is display content data obtained in rendering layers for light spot display;
receiving, by the graphics processing module, the second-light-spot display data, and obtaining fingerprint scenario mark information; and
synchronously transmitting, by the graphics processing module, the fingerprint scenario mark information and the second-light-spot display data to the display driver, wherein the fingerprint scenario mark information and the second-light-spot display data are used to enable the touchscreen to display a second light spot.

8. The method according to claim 7, wherein the synchronously transmitting, by the graphics processing module, the fingerprint scenario mark information and the second-light-spot display data to the display driver comprises:
simultaneously transmitting, by the graphics processing module, the fingerprint scenario mark information and the second-light-spot display data to the display driver through a same transmit path.

9. The method according to claim 8, wherein the simultaneously transmitting, by the graphics processing module, the fingerprint scenario mark information and the second-light-spot display data to the display driver through a same transmit path comprises:
writing, by the graphics processing module, the fingerprint scenario mark information and the second-light-spot display data into a same transmit queue, and transmitting data in the transmit queue to the display driver through the same transmit path.

10. The method according to any one of claims 7 to 9, wherein the layers for light spot display comprise a light spot layer and a mask layer;
the light spot layer is the same as the light spot displayed on the touchscreen in position and shape, and an area of the light spot layer is larger than a size of the light spot displayed on the touchscreen; and
the mask layer comprises a hollow carved zone and a non-hollow carved zone, and the hollow carved zone is the same as the light spot layer in position, shape, and size.

11. The method according to any one of claims 1 to 10, wherein the operating system of the electronic device is an android system, the fingerprint driver is a fingerprint driver in the android system, and the display driver is a display driver in the android system.

12. The method according to any one of claims 7 to 10, wherein the operating system of the electronic device is an android system, the fingerprint service is a fingerprint service in the android system, the graphics processing module comprises a graphics engine and a graphics hardware composer in the android system, and the display driver is a display driver in the android system;
in response to the fingerprint event, the fingerprint service obtains the second-light-spot display data and transmits the second-light-spot display data to the graphics engine;
the graphics engine transmits the second-light-spot display data to the graphics hardware composer;
the graphics hardware composer obtains the fingerprint scenario mark information after receiving the second-light-spot display data; and
the graphics hardware composer synchronously transmits the fingerprint scenario mark information and the second-light-spot display data to the display driver.

13. The method according to claim 12, wherein that the graphics hardware composer synchronously transmits the fingerprint scenario mark information and the second-light-spot display data to the display driver comprises:
synchronously transmitting, by the graphics hardware composer, the fingerprint scenario mark information and the second-light-spot display data to the display driver through a same transmit path.

14. The method according to claim 13, wherein the synchronously transmitting, by the graphics hardware composer, the fingerprint scenario mark information and the second-light-spot display data to the display driver through a same transmit path comprises:
writing, by the graphics hardware composer, the fingerprint scenario mark information and the second-light-spot display data into a same transmit queue, and transmitting data in the transmit queue to the display driver through the same transmit path.

15. A light spot display method, applied to an electronic device with a touchscreen, wherein an operating system of the electronic device comprises a fingerprint driver and a display driver, and the method comprises:
receiving, by the fingerprint driver, a fingerprint event, wherein the fingerprint event is generated based on a touch operation in a detection zone of the touchscreen;
directly transmitting, by the fingerprint driver, the fingerprint event to the display driver; and
driving, by the display driver in response to the fingerprint event, the touchscreen to light up display pixels in a light spot display zone of the touchscreen based on the preset first-light-spot display data, and control display pixels outside the light spot display zone of the touchscreen to remain in a non-lit state, so as to display a first light spot.

16. A light spot display method, applied to an electronic device with a touchscreen, wherein an operating system of the electronic device comprises a fingerprint driver, a fingerprint abstraction layer, and a display driver, and the method comprises:
receiving, by the fingerprint driver, a fingerprint event, wherein the fingerprint event is generated based on a touch operation in a detection zone of the touchscreen;
transmitting, by the fingerprint driver, the fingerprint event to the fingerprint abstraction layer;
generating, by the fingerprint abstraction layer, a light spot display instruction in response to the fingerprint event, and transmitting the light spot display instruction to the display driver; and
executing, by the display driver, the light spot display instruction, to drive the touchscreen to light up display pixels in a light spot display zone of the touchscreen based on preset first-light-spot display data, and control display pixels outside the light spot display zone of the touchscreen to remain in a non-lit state, so as to display a first light spot.

17. An electronic device, wherein the electronic device comprises one or more processors, a memory, and a touchscreen;
the memory is configured to store program code; and
the processor is configured to run the program code to perform the following steps:
receiving, by a fingerprint driver, a fingerprint event, wherein the fingerprint event is generated based on a touch operation in a detection zone of the touchscreen;
directly transmitting, by the fingerprint driver, the fingerprint event to a display driver; and
controlling, by the display driver in response to the fingerprint event, the touchscreen to display a first light spot based on preset first-light-spot display data.

18. The electronic device according to claim 17, wherein the directly transmitting, by the fingerprint driver, the fingerprint event to a display driver comprises:
transmitting, by the fingerprint driver, the fingerprint event to the display driver through a transmit path between the fingerprint driver and the display driver.

19. The electronic device according to claim 17 or 18, wherein the controlling, by the display driver in response to the fingerprint event, the touchscreen to display a first light spot based on preset first-light-spot display data comprises:
transmitting, by the display driver, a light spot display instruction to the touchscreen in response to the fingerprint event, wherein the light spot display instruction is used to enable the touchscreen to control display statuses of display pixels in the touchscreen based on the preset first-light-spot display data, to display the first light spot.

20. The electronic device according to claim 19, wherein the first-light-spot display data comprises a light spot position, shape, size, and color; and
the light spot display instruction is used to enable the touchscreen to determine, based on the light spot position, shape, and size, a light spot display zone, and control a display brightness corresponding to display pixels in the light spot display zone to reach a specified brightness and a display color of the display pixels to change to the light spot color.

21. The electronic device according to claim 19 or 20, wherein the transmitting, by the display driver, a light spot display instruction to the touchscreen in response to the fingerprint event comprises:
generating, by the display driver, a light spot display interrupt in response to the fingerprint event;
obtaining, by the display driver, the preset first-light-spot display data; and
transmitting, by the display driver, the light spot display interrupt and the first-light-spot display data to the touchscreen.

22. The electronic device according to claim 19 or 20, wherein the light spot display instruction is used to enable the touchscreen to obtain the preset first-light-spot display data from the touchscreen,
and control the display statuses of the display pixels in the touchscreen based on the first-light-spot display data, to display the first light spot.

23. The electronic device according to any one of claims 18 to 22, wherein the processor runs the program code to further perform the following steps:
obtaining, by a fingerprint service, second-light-spot display data in response to the fingerprint event, wherein the second-light-spot display data is display content data obtained in rendering layers for light spot display;
receiving, by a graphics processing module, the second-light-spot display data, and obtaining fingerprint scenario mark information; and
synchronously transmitting, by the graphics processing module, the fingerprint scenario mark information and the second-light-spot display data to the display driver, wherein the fingerprint scenario mark information and the second-light-spot display data are used to enable the touchscreen to display a second light spot.

24. The electronic device according to claim 22, wherein the synchronously transmitting, by the graphics processing module, the fingerprint scenario mark information and the second-light-spot display data to the display driver comprises:
simultaneously transmitting, by the graphics processing module, the fingerprint scenario mark information and the second-light-spot display data to the display driver through a same transmit path.

25. The electronic device according to claim 23, wherein the simultaneously transmitting, by the graphics processing module, the fingerprint scenario mark information and the second-light-spot display data to the display driver through a same transmit path comprises:
writing, by the graphics processing module, the fingerprint scenario mark information and the second-light-spot display data into a same transmit queue, and transmitting data in the transmit queue to the display driver through the same transmit path.

26. An electronic device, wherein the electronic device comprises one or more processors, a memory, and a touchscreen;
the memory is configured to store program code; and
the processor is configured to run the program code to perform the following steps:
receiving, by a fingerprint driver, a fingerprint event, wherein the fingerprint event is generated based on a touch operation in a detection zone of the touchscreen;
directly transmitting, by the fingerprint driver, the fingerprint event to a display driver; and
driving, by the display driver in response to the fingerprint event, the touchscreen to light up display pixels in a light spot display zone of the touchscreen based on the preset first-light-spot display data, and control display pixels outside the light spot display zone of the touchscreen to remain in a non-lit state, so as to display a first light spot.

27. An electronic device, wherein the electronic device comprises one or more processors, a memory, and a touchscreen;
the memory is configured to store program code; and
the processor is configured to run the program code to perform the following steps:
receiving, by a fingerprint driver, a fingerprint event, wherein the fingerprint event is generated based on a touch operation in a detection zone of the touchscreen;
transmitting, by the fingerprint driver, the fingerprint event to a fingerprint abstraction layer;
generating, by the fingerprint abstraction layer, a light spot display instruction in response to the fingerprint event, and transmitting the light spot display instruction to a display driver; and
executing, by the display driver, the light spot display instruction, to drive the touchscreen to light up display pixels in a light spot display zone of the touchscreen based on preset first-light-spot display data, and control display pixels outside the light spot display zone of the touchscreen to remain in a non-lit state, so as to display a first light spot.

28. A computer-readable storage medium, storing instructions, wherein when the instructions are run on an electronic device, the electronic device is enabled to perform the light spot display method according to any one of claims 1 to 16.

## Amended claims

### Amended claims under Art. 19.1 PCT

1. A light spot display method, applied to an electronic device with a touchscreen, wherein an operating system of the electronic device comprises a fingerprint driver and a display driver, and the method comprises:
receiving, by the fingerprint driver, a fingerprint event, wherein the fingerprint event is generated based on a touch operation in a detection zone of the touchscreen;
directly transmitting, by the fingerprint driver, the fingerprint event to the display driver; and
controlling, by the display driver in response to the fingerprint event, the touchscreen to display a first light spot based on preset first-light-spot display data.

2. The method according to claim 1, wherein the directly transmitting, by the fingerprint driver, the fingerprint event to the display driver comprises:
transmitting, by the fingerprint driver, the fingerprint event to the display driver through a transmit path between the fingerprint driver and the display driver.

3. The method according to claim 1 or 2, wherein the controlling, by the display driver in response to the fingerprint event, the touchscreen to display a first light spot based on preset first-light-spot display data comprises:
transmitting, by the display driver, a light spot display instruction to the touchscreen in response to the fingerprint event, wherein the light spot display instruction is used to enable the touchscreen to control display statuses of display pixels in the touchscreen based on the preset first-light-spot display data, to display the first light spot.

4. The method according to claim 3, wherein the first-light-spot display data comprises a light spot position, shape, size, and color; and
the light spot display instruction is used to enable the touchscreen to determine, based on the light spot position, shape, and size, a light spot display zone, and control a display brightness corresponding to display pixels in the light spot display zone to reach a specified brightness and a display color of the display pixels to change to the light spot color.

5. The method according to claim 3 or 4, wherein the transmitting, by the display driver, a light spot display instruction to the touchscreen in response to the fingerprint event comprises:
generating, by the display driver, a light spot display interrupt in response to the fingerprint event;
obtaining, by the display driver, the preset first-light-spot display data from the display driver; and
transmitting, by the display driver, the light spot display interrupt and the first-light-spot display data to the touchscreen.

6. The method according to claim 3 or 4, wherein the light spot display instruction is used to enable the touchscreen to obtain the preset first-light-spot display data from the touchscreen, and control the display statuses of the display pixels in the touchscreen based on the first-light-spot display data, to display the first light spot.

7. The method according to any one of claims 1 to 6, wherein the operating system of the electronic device further comprises a fingerprint service and a graphics processing module, and the method further comprises:
receiving, by the fingerprint service, the fingerprint event;
obtaining, by the fingerprint service, second-light-spot display data in response to the fingerprint event, wherein the second-light-spot display data is display content data obtained in rendering layers for light spot display;
receiving, by the graphics processing module, the second-light-spot display data, and obtaining fingerprint scenario mark information; and
synchronously transmitting, by the graphics processing module, the fingerprint scenario mark information and the second-light-spot display data to the display driver, wherein the fingerprint scenario mark information and the second-light-spot display data are used to enable the touchscreen to display a second light spot.

8. The method according to claim 7, wherein the synchronously transmitting, by the graphics processing module, the fingerprint scenario mark information and the second-light-spot display data to the display driver comprises:
simultaneously transmitting, by the graphics processing module, the fingerprint scenario mark information and the second-light-spot display data to the display driver through a same transmit path.

9. The method according to claim 8, wherein the simultaneously transmitting, by the graphics processing module, the fingerprint scenario mark information and the second-light-spot display data to the display driver through a same transmit path comprises:
writing, by the graphics processing module, the fingerprint scenario mark information and the second-light-spot display data into a same transmit queue, and transmitting data in the transmit queue to the display driver through the same transmit path.

10. The method according to any one of claims 7 to 9, wherein the layers for light spot display comprise a light spot layer and a mask layer;
the light spot layer is the same as the light spot displayed on the touchscreen in location and shape, and an area of the light spot layer is larger than a size of the light spot displayed on the touchscreen; and
the mask layer comprises a hollow carved zone and a non-hollow carved zone, and the hollow carved zone is the same as the light spot layer in location, shape, and size.

11. The method according to any one of claims 1 to 10, wherein the operating system of the electronic device is an android system, the fingerprint driver is a fingerprint driver in the android system, and the display driver is a display driver in the android system.

12. The method according to any one of claims 7 to 10, wherein the operating system of the electronic device is an android system, the fingerprint service is a fingerprint service in the android system, the graphics processing module comprises a graphics engine and a graphics hardware composer in the android system, and the display driver is a display driver in the android system;
in response to the fingerprint event, the fingerprint service obtains the second-light-spot display data and transmits the second-light-spot display data to the graphics engine;
the graphics engine transmits the second-light-spot display data to the graphics hardware composer;
the graphics hardware composer obtains the fingerprint scenario mark information after receiving the second-light-spot display data; and
the graphics hardware composer synchronously transmits the fingerprint scenario mark information and the second-light-spot display data to the display driver.

13. The method according to claim 12, wherein that the graphics hardware composer synchronously transmits the fingerprint scenario mark information and the second-light-spot display data to the display driver comprises:
synchronously transmitting, by the graphics hardware composer, the fingerprint scenario mark information and the second-light-spot display data to the display driver through a same transmit path.

14. The method according to claim 13, wherein the synchronously transmitting, by the graphics hardware composer, the fingerprint scenario mark information and the second-light-spot display data to the display driver through a same transmit path comprises:
writing, by the graphics hardware composer, the fingerprint scenario mark information and the second-light-spot display data into a same transmit queue, and transmitting data in the transmit queue to the display driver through the same transmit path.

15. A light spot display method, applied to an electronic device with a touchscreen, wherein an operating system of the electronic device comprises a fingerprint driver and a display driver, and the method comprises:
receiving, by the fingerprint driver, a fingerprint event, wherein the fingerprint event is generated based on a touch operation in a detection zone of the touchscreen;
directly transmitting, by the fingerprint driver, the fingerprint event to the display driver; and
driving, by the display driver in response to the fingerprint event, the touchscreen to light up display pixels in a light spot display zone of the touchscreen based on preset first-light-spot display data, and control display pixels outside the light spot display zone of the touchscreen to remain in a non-lit state, so as to display a first light spot.

16. A light spot display method, applied to an electronic device with a touchscreen, wherein an operating system of the electronic device comprises a fingerprint driver, a fingerprint abstraction layer, and a display driver, and the method comprises:
receiving, by the fingerprint driver, a fingerprint event, wherein the fingerprint event is generated based on a touch operation in a detection zone of the touchscreen;
transmitting, by the fingerprint driver, the fingerprint event to the fingerprint abstraction layer;
generating, by the fingerprint abstraction layer, a light spot display instruction in response to the fingerprint event, and transmitting the light spot display instruction to the display driver; and
executing, by the display driver, the light spot display instruction to drive the touchscreen to control display statuses of display pixels in the touchscreen based on preset first-light-spot display data, to display a first light spot.

17. The method according to claim 16, wherein the executing, by the display driver, the light spot display instruction to drive the touchscreen to control display statuses of display pixels in the touchscreen based on preset first-light-spot display data, to display a first light spot comprises:
executing, by the display driver, the light spot display instruction, to drive the touchscreen to light up display pixels in a light spot display zone of the touchscreen based on the preset first-light-spot display data, and control display pixels outside the light spot display zone of the touchscreen to remain in a non-lit state, so as to display the first light spot.

18. The method according to claim 16, wherein the executing, by the display driver, the light spot display instruction to drive the touchscreen to control display statuses of display pixels in the touchscreen based on preset first-light-spot display data, to display a first light spot comprises:
executing, by the display driver, the light spot display instruction to generate a light spot display interrupt;
obtaining, by the display driver, the preset first-light-spot display data from the display driver; and
transmitting, by the display driver, the light spot display interrupt and the first-light-spot display data to the touchscreen to enable the touchscreen to control, based on the first-light-spot display data, the display statuses of the display pixels in the touchscreen in response to the light spot display interrupt, to display the first light spot.

19. The method according to claim 16, wherein the executing, by the display driver, the light spot display instruction to drive the touchscreen to control display statuses of display pixels in the touchscreen based on preset first-light-spot display data, to display a first light spot comprises:
executing, by the display driver, the light spot display instruction to generate a light spot display interrupt;
transmitting, by the display driver, the light spot display interrupt to the touchscreen to enable the touchscreen to obtain, in response to the light spot display interrupt, the preset first-light-spot display data from the touchscreen and control the display statuses of the display pixels in the touchscreen based on the first-light-spot display data, to display the first light spot.

20. The method according to claim 16, wherein the first-light-spot display data comprises a light spot position, shape, size, and color; and
the touchscreen determines, based on the light spot position, shape, and size, a light spot display zone, and controls a display brightness corresponding to display pixels in the light spot display zone to reach a specified brightness and a display color of the display pixels to change to the light spot color.

21. The method according to claim 16, wherein the transmitting, by the fingerprint abstraction layer, the light spot display instruction to the display driver comprises:
transmitting, by the fingerprint abstraction layer, the light spot display instruction through an existing transmit path between the fingerprint abstraction layer and the display driver.

22. The method according to any one of claims 16 to 21, wherein a fingerprint service and a graphics processing module run inside the electronic device, and the method further comprises:
receiving, by the fingerprint service, the fingerprint event;
obtaining, by the fingerprint service, second-light-spot display data in response to the fingerprint event, wherein the second-light-spot display data is display content data obtained in rendering layers for light spot display;
receiving, by the graphics processing module, the second-light-spot display data, and obtaining fingerprint scenario mark information; and
synchronously transmitting, by the graphics processing module, the fingerprint scenario mark information and the second-light-spot display data to the display driver, wherein the fingerprint scenario mark information and the second-light-spot display data are used to enable the touchscreen to display a second light spot.

23. The method according to claim 22, wherein the synchronously transmitting, by the graphics processing module, the fingerprint scenario mark information and the second-light-spot display data to the display driver comprises:
simultaneously transmitting, by the graphics processing module, the fingerprint scenario mark information and the second-light-spot display data to the display driver through a same transmit path.

24. The method according to claim 23, wherein the simultaneously transmitting, by the graphics processing module, the fingerprint scenario mark information and the second-light-spot display data to the display driver through a same transmit path comprises:
writing, by the graphics processing module, the fingerprint scenario mark information and the second-light-spot display data into a same transmit queue, and transmitting data in the transmit queue to the display driver through the same transmit path.

25. The method according to any one of claims 22 to 24, wherein the layers for light spot display comprise a light spot layer and a mask layer;
the light spot layer is the same as the light spot displayed on the touchscreen in location and shape, and an area of the light spot layer is larger than a size of the light spot displayed on the touchscreen; and
the mask layer comprises a hollow carved zone and a non-hollow carved zone, and the hollow carved zone is the same as the light spot layer in location, shape, and size.

26. The method according to any one of claims 16 to 25, wherein the operating system of the electronic device is an android system, the fingerprint driver is a fingerprint driver in the android system, and the display driver is a display driver in the android system.

27. The method according to any one of claims 22 to 25, wherein the operating system of the electronic device is an android system, the fingerprint service is a fingerprint service in the android system, the graphics processing module comprises a graphics engine and a graphics hardware composer in the android system, and the display driver is a display driver in the android system;
in response to the fingerprint event, the fingerprint service obtains the second-light-spot display data and transmits the second-light-spot display data to the graphics engine;
the graphics engine transmits the second-light-spot display data to the graphics hardware composer;
the graphics hardware composer obtains the fingerprint scenario mark information after receiving the second-light-spot display data; and
the graphics hardware composer synchronously transmits the fingerprint scenario mark information and the second-light-spot display data to the display driver.

28. The method according to claim 27, wherein the synchronously transmitting, by the graphics hardware composer, the fingerprint scenario mark information and the second-light-spot display data to the display driver comprises:
synchronously transmitting, by the graphics hardware composer, the fingerprint scenario mark information and the second-light-spot display data to the display driver through a same transmit path.

29. The method according to claim 28, wherein the synchronously transmitting, by the graphics hardware composer, the fingerprint scenario mark information and the second-light-spot display data to the display driver through a same transmit path comprises:
writing, by the graphics hardware composer, the fingerprint scenario mark information and the second-light-spot display data into a same transmit queue, and transmitting data in the transmit queue to the display driver through the same transmit path.

30. An electronic device, wherein the electronic device comprises one or more processors, a memory, and a touchscreen;
the memory is configured to store program code; and
the processor is configured to run the program code to perform the light spot display method according to any one of claims 1 to 29.

31. A computer-readable storage medium, storing instructions, wherein when the instructions are run on an electronic device, the electronic device is enabled to perform the light spot display method according to any one of claims 1 to 29.
